# EUROPÄISCHE PATENTSCHRIFT

(11) **EP 1 815 734 B1**
(45) Veröffentlichungstag und Bekanntmachung des Hinweises auf die Patenterteilung: **20.07.2011**
(21) Anmeldenummer: 07000662.2
(22) Anmeldetag: 14.01.2007
(51) Int. Cl.: A01G 9/12

(54) **Universeller Pflanzenhalter mit Bodenkralle**
Universal plant support with ground anchoring
Support de plantes universel avec ancrage au sol

(30) Priorität: 18.01.2006 DE 202006000643 U
(43) Veröffentlichungstag der Anmeldung: 08.08.2007
(73) Patentinhaber: Marke, Wilhelm, 88138 Sigmarszell (DE)
(72) Erfinder: Marke, Wilhelm, 88138 Sigmarszell (DE)

(56) Entgegenhaltungen:
- DE-U1- 20 219 498
- GB-A- 772 297
- GB-A- 790 369
- GB-A- 2 412 284
- US-A- 3 026 650
- US-A1- 2005 108 932

## Beschreibung

Die Erfindung betrifft einen Pflanzenhalter zur Halterung von Pflanzen aller Art im Innen- und Außenbereich.

Pflanzenhalter üblicher Bauart bestehen in der Regel aus Ringen oder Stäben, die an Stangen, welche in den Boden gesteckt werden, befestigt werden. Diese Ringe oder Stäbe gibt es in verschiedenen Größen und Ausführungen in Kunststoff und Metall. In diese Ringe oder Stäbe werden die Pflanzen eingeordnet.

Andere Systeme bestehen aus Pflanzenhaltern, bei denen die Ringe oder Stäbe o.ä. in Halterungen eingesteckt werden, die auf in den Boden gesteckten Stangen verschiebbar sind, um sie dem Höhenwachstum der Pflanzen anzupassen. Dabei handelt es sich um spezielle Stäbe, starre Ringe und spezielles Zubehör.

Auch sind einfache gebogene Drähte im Handel, die neben den Pflanzen in den Boden gesteckt werden und die Pflanzten seitlich stützen.

Alle diese Systeme haben gravierende Schwächen: Entweder sind sie zu schwach, um stärkerem Wind standzuhalten, zu teuer, sie müssen dem Wachstum entsprechend ständig ergänzt oder erneuert werden und/oder durch Bindedraht bzw. Schnur zusätzlich verstärkt werden. Bei Systemen mit Ring - oder Stabhaltem sind zudem nur bestimmte Stäbe, Ringformen und - größen möglich. In die Erde eingesteckte Haltestäbe sind nur schwer ausreichend zu verankern.

US-A-3 026 650 offenbart einen Pflanzenhalter mit einem länglichen Grundkörper mit mehreren offenen oder geschlossenen Quernuten zur Aufnahme von Befestigungsmitteln für Pflanzen, und einer an einem Ende angeordneten Befestigungsvorrichtung zur Fixierung des Pflanzenhalters.

Es ist die Aufgabe der Erfindung, einen Pflanzenhalter vorzuschlagen, der einfach und flexibel einsetzbar ist, und des ein Herausrutschen eines Drahtes aus des Querrille verhindert.

Diese Aufgabe wird erfindungsgemäß durch einen Pflanzenhalter mit den im Anspruch 1 aufgeführten Merkmalen gelöst.

Bevorzugte Ausgestaltungen und weitere Merkmale des Pflanzenhalters sind in den abhängigen Ansprüchen angegeben.

Mit der Erfindung des universellen Pflanzenhalters mit Bodenkralle wird erreicht, dass Pflanzen im Innen und Außenbereich über die gesamte Wachstumszeit ohne Austausch oder Ergänzung von Teilen auch bei starkem Wind gehalten werden. Dabei besteht freie Wahl der Ringform, -größe, -höhe, -anzahl der Haltedrähte, des Stabmaterials, -durchmessers, der Form des Stabes, der Stabposition und -länge und der Menge der Pflanzenhalter an einem Stab. Auch ist die Ringform an den natürlichen Pflanzenwuchs jederzeit anpassbar (oval, eckig usw.).

Eine vorteilhafte Ausführung der Erfindung ist die Möglichkeit der Befestigung des Pflanzenhalters an Wänden, Zäunen und anderen Flächen mittels angeschraubten geraden oder abgewinkelten Bolzen.

Ausführungsbeispiele der Erfindung werden in den Figuren 1-9 erläutert. Aus den Zeichnungen und deren Beschreibung ergeben sich weitere Merkmale und Vorteile der Erfindung.

Die Zeichnungen zeigen:
Figur 1 den Pflanzenhalter in der ersten Variante
Figuren 2a, 2b, 2c, 2d den Pflanzenhalter mit seinen diversen Einsatzmöglichkeiten
Figur 3 die Bodenkralle
Figur 4 die Bodenkralle mit ihren diversen Einsatzmöglichkeiten
Figuren 5, 5a den Pflanzenhalter in der erfindungsgemäße zweiten Variante
Figur 6 den Pflanzenhalter in der Erfindungsgemäße zweiten Variante; Draufsicht
Figuren 7a, 7b, 7c, 7d den Pflanzenhalter in der Erfindungsgemäße zweiten Variante mit seinen diversen Einsatzmöglichkeiten
Figur 8 die Bodenkralle in der Erfindungsgemäße zweiten Variante
Figur 9 die Bodenkralle in der Erfindungsgemäße zweiten Variante mit ihren diversen Einsatzmöglichkeiten

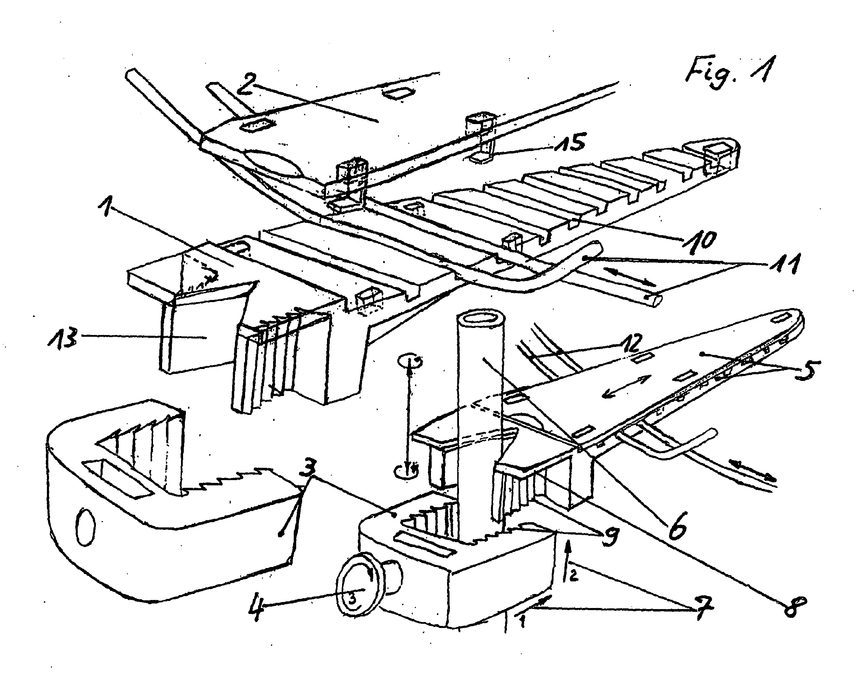

Figur 1 zeigt den Pflanzenhalter in der ersten Variante mit dem Grundkörper -1- mit Abdeckplatte -2-, Klemmblock -3- und Klemmschraube -4-. Der Grundkörper -1- wird an einem im Boden verankerten Stab -6- befestigt.
Die Abdeckplatte -2- wird auf den Grundkörper -1- bündig aufgeschoben, geclipst oder geschraubt -5-. Der Klemmblock -3- wird entsprechend dem Stab -6- von unten auf den Grundkörper (Pfeile 1 und 2) -7- bis zum Anschlag -8- geschoben. Die Verzahnung -9- greift in der dem Durchmesser entsprechenden Stellung ineinander. Mit der Klemmschraube -4- wird dann der Pflanzenhalter in der gewünschten Position am Stab -6- fixiert. Im Grundkörper sind mehrere Querrillen -10-vorgesehen, in welche Haltedrähte -11- zur Halterung der Pflanzen eingelegt oder geschoben -12- werden. Die Haltedrähte können in verschiedenen durch die Querrillen -10- definierten Positionen befestigt werden.

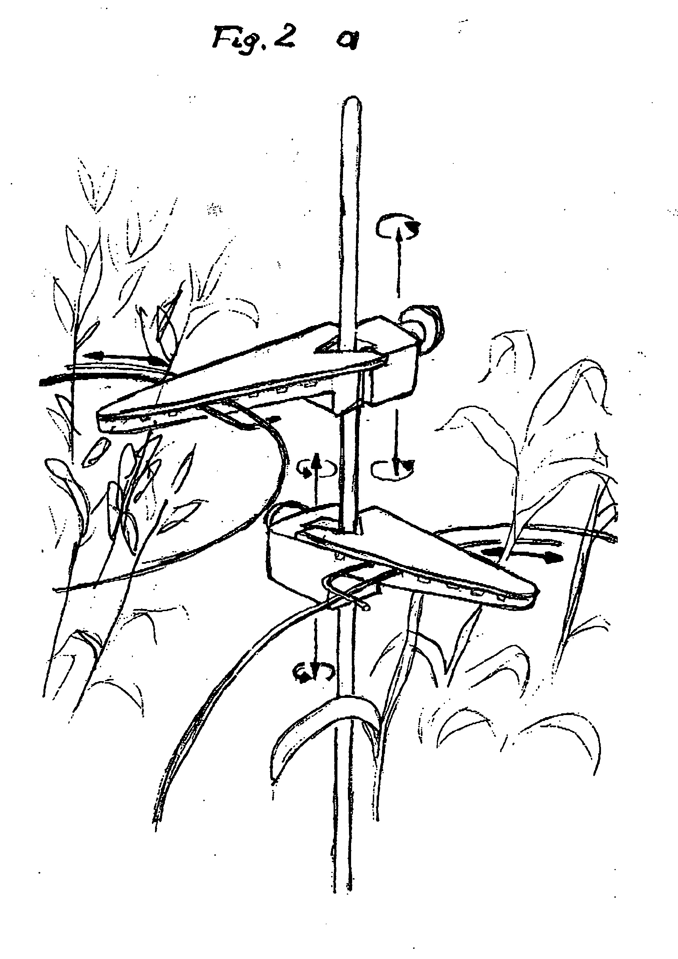

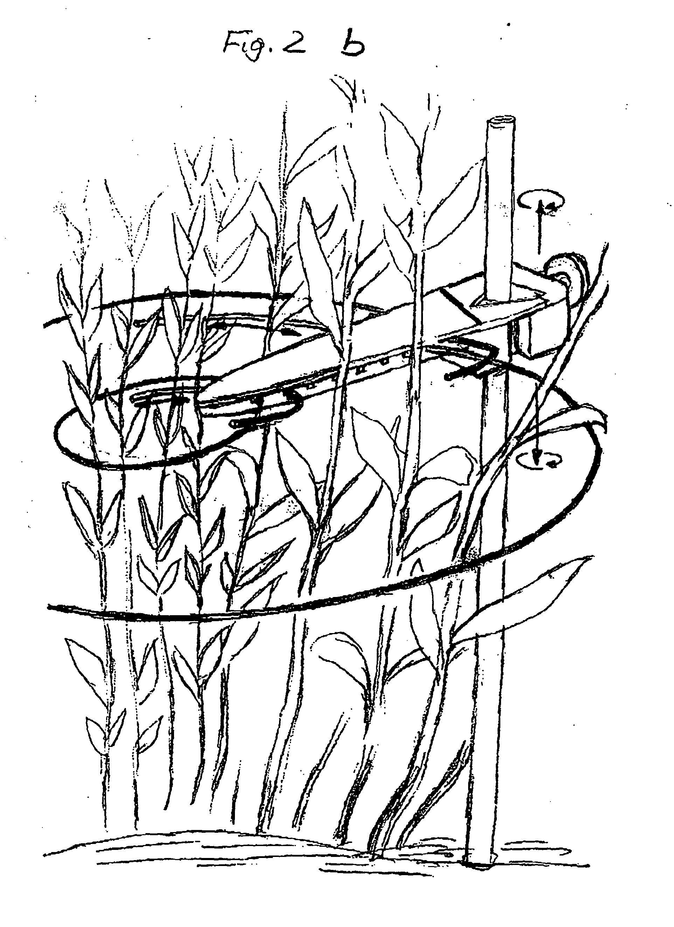

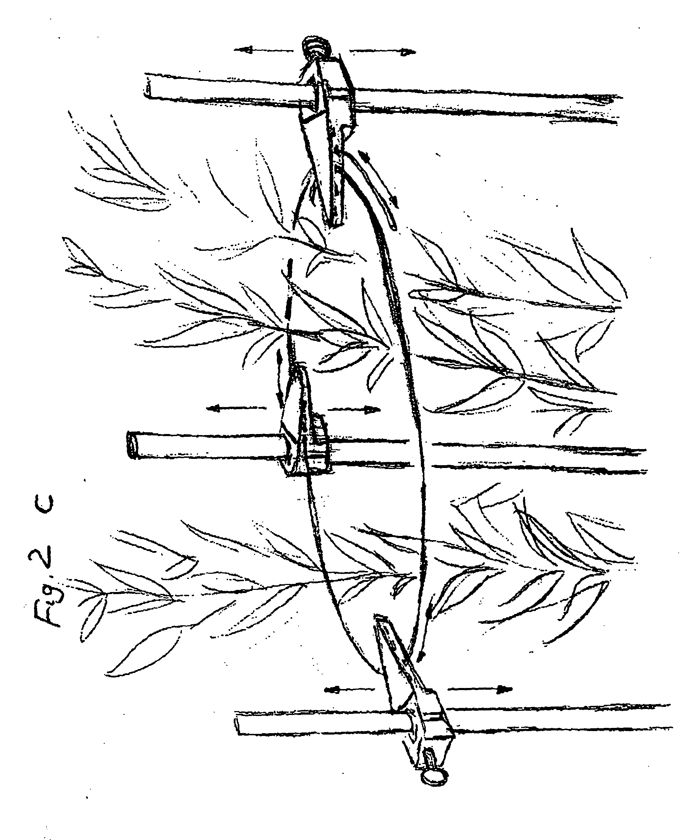

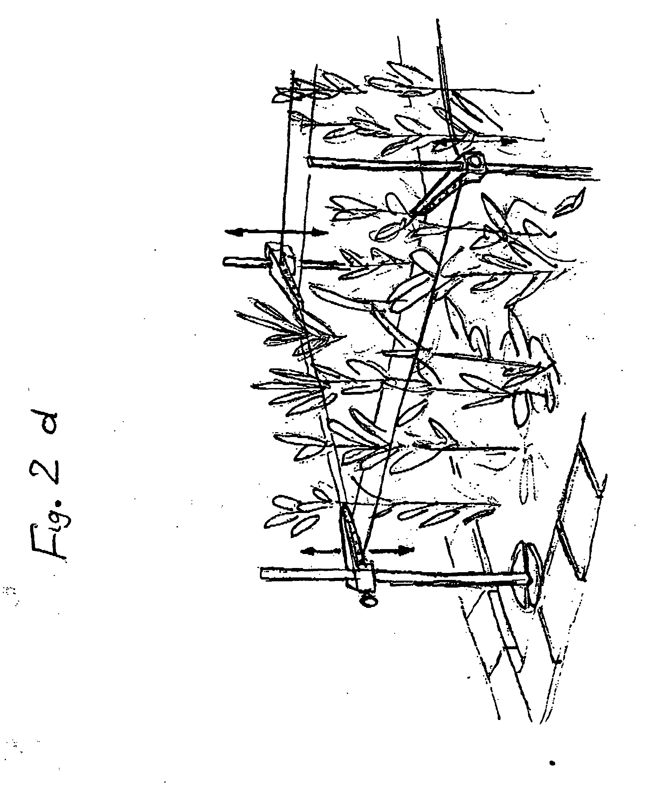

Die Figuren 2a bis 2d zeigen den Pflanzenhalter mit seinen Einsatzmöglichkeiten. Die Haltedrähte werden am Grundkörper befestigt und bilden Ringe zur Halterung der Pflanzen. Es sind alle Ringformen und -größen der Halterdrähte möglich.

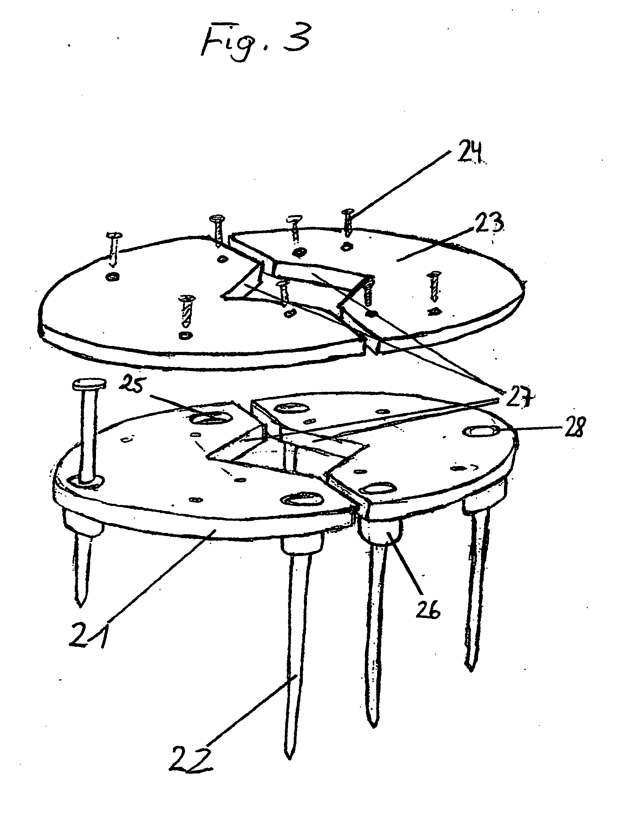

Figur 3 stellt die Bodenkralle zur Unterstützung eines im Boden befestigten Stabs der. Die Bodenkralle wird mit den Spikes -22- neben dem Stab-6- in den Boden gedrückt und stützt ihn gegen seitlichen Druck ab, wobei in der Regel entweder eine Kralle (im Innenbereich) oder zwei sich ergänzende Krallen (im Außenbereich) zum Einsatz kommen (verschiedene Windrichtungen!).
Die Kralle besteht aus einer Grundplatte -21-, in die beliebig viele Spikes -22-eingesetzt werden. Die Abdeckplatte -23- wird auf die Grundplatte geschraubt -24-. Die Köpfe der Spikes werden in die Grundplatte eingelassen -25- und durch die Abdeckplatte -23- gegen Herausrutschen gesichert.

An der Unterseite der Grundplatte -21- sind Warzen angebracht -26-, um die Führung der Spikes zu verbessern. In der Mitte der Grundplatte -21- befindet sich eine prismatische oder halbrunde Ausnehmung -27-, die als Halterung der Stäbe dient.

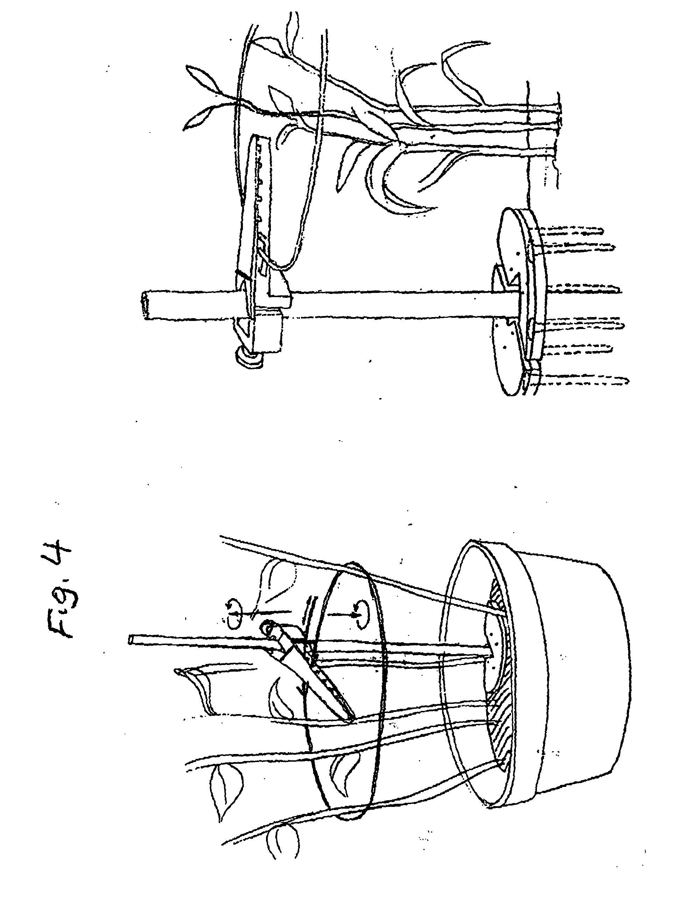

Figur 4 zeigt die Bodenkralle mit diversen Einsatzmöglichkeiten im Innenbereich (Topfpflanzen) und Aussenbereich.

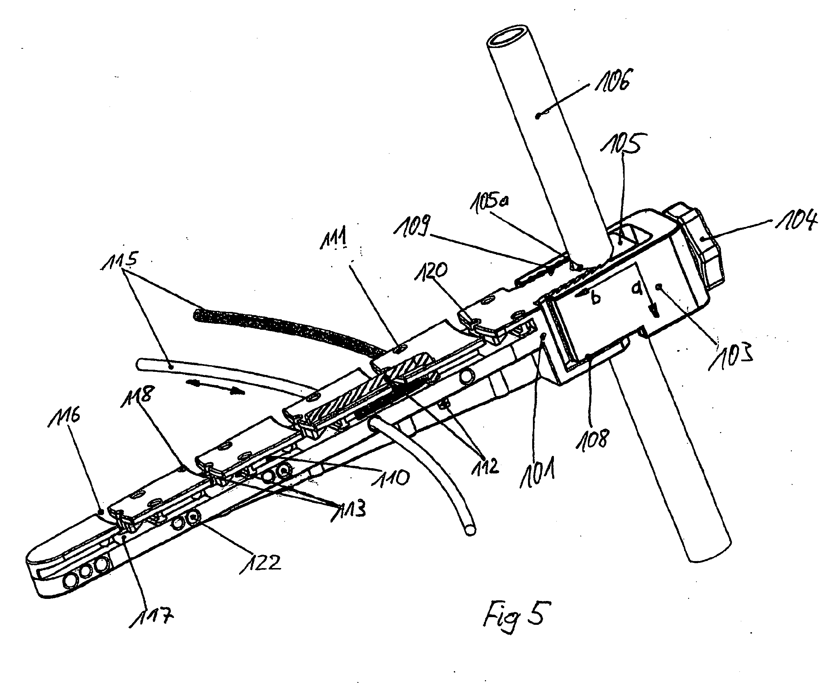

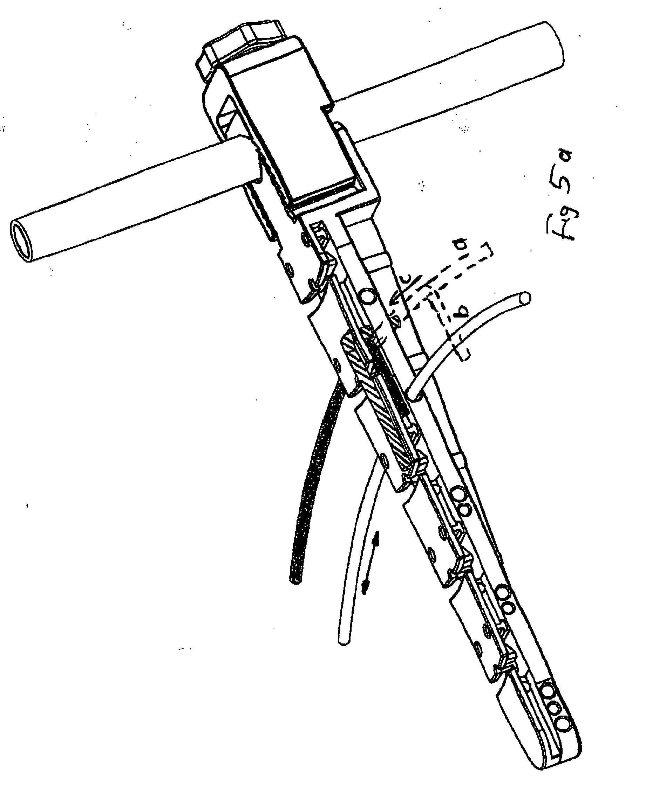

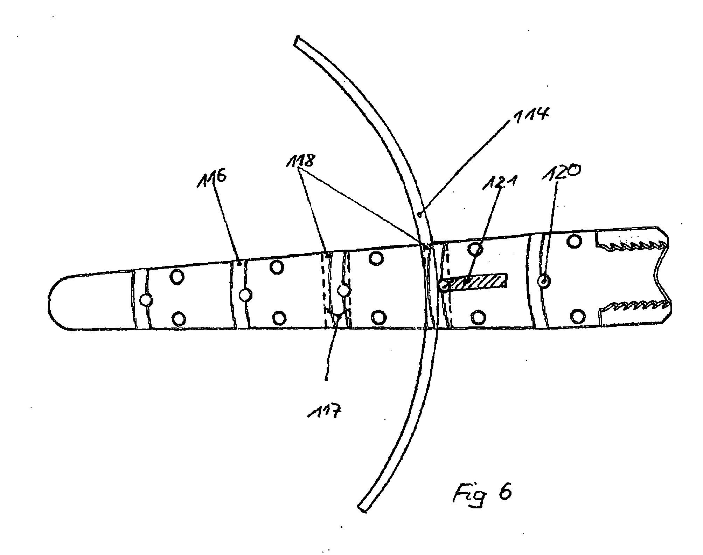

Die Figuren 5 und 6 zeigen den Pflanzenhalter in der erfindungsgemäße zweiten Variante mit dem Grundkörper -101-, Klemmblock -103- und Klemmschraube mit Handrad -104- und der Prismendruckplatte 105-.

Der Klemmblock -103 wird entsprechend dem Durchmesser des Stabes -106- von oben auf den Grundkörper (Pfeile a und b) bis zum Anschlag -108- geschoben. Die Verzahnung -109- greift in der dem Durchmesser des Stabes entsprechenden Stellung ineinander. Mit dem Handrad -104- wird eine Schraube betätigt und das Prisma -105- gegen den Stab und gegen das Gegenprisma - 105a- im Grundkörper gepresst und der Pflanzenhalter in der gewünschten Position am Stab -106- fixiert.

An der Längsseite des Grundkörpers -101- verlaufen Rillen -110-, die als Fixierung und Verdrehsicherung des Drahtes -115- dienen.

In die senkrecht im Grundkörper -101- angeordneten Löcher -111- werden abgewinkelte Drahtstücke -112- o.a. von oben eingesteckt. Durch die spezielle Position dieser Löcher wird ein Herausrutschen des Drahtes -115- aus der Rille - 110- verhindert.

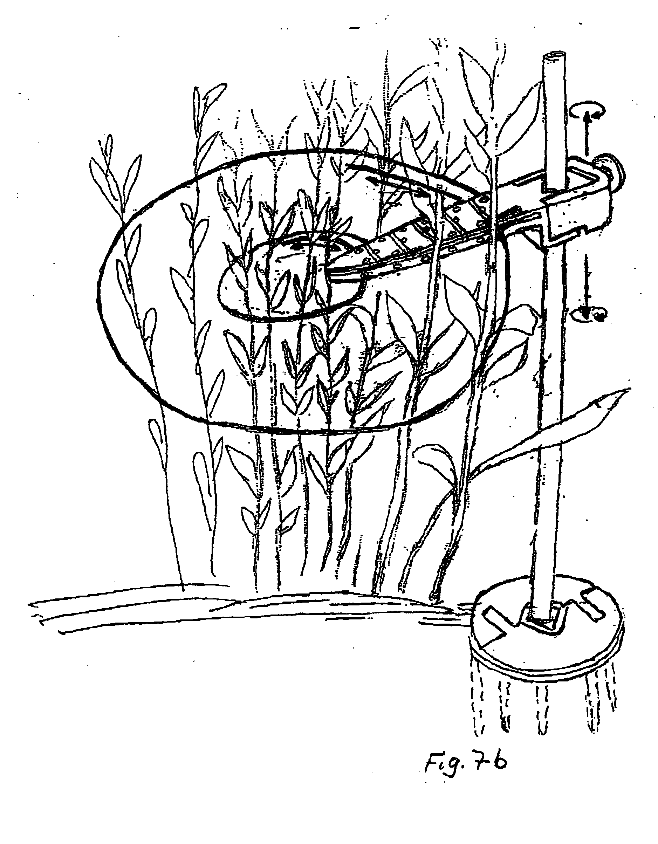

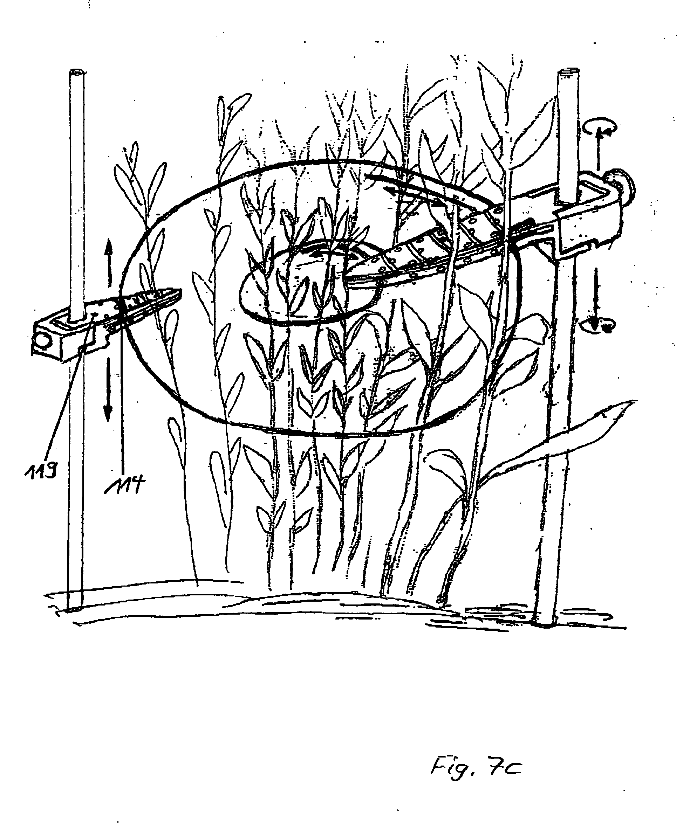

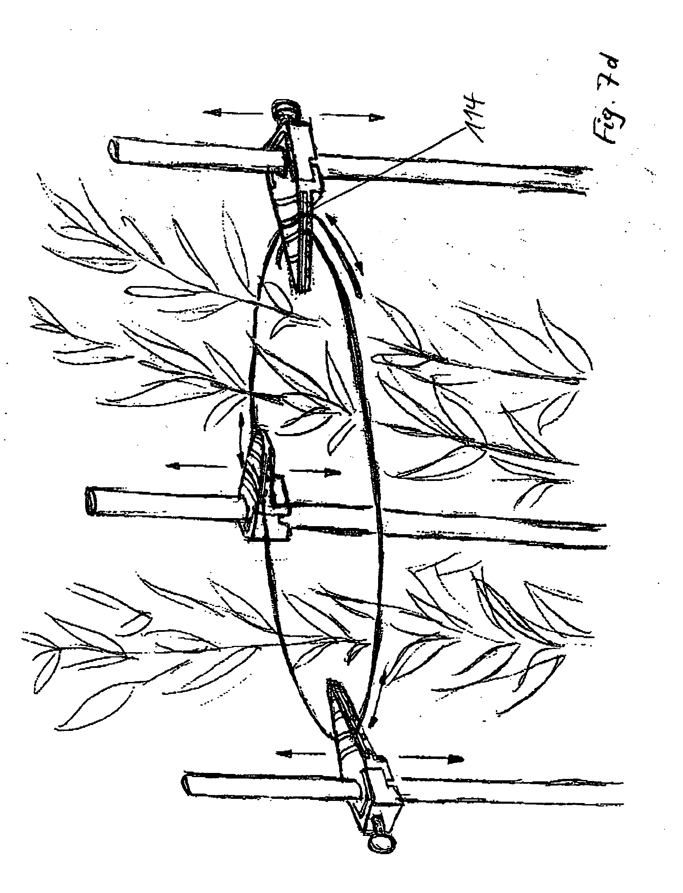

Ferner sind im Grundkörper -101- Querrillen -116-, -113- vorgesehen, in die Haltedrähte -114- eingelegt (vgl. Figur 6 und 7c und 7d) oder geschoben - 115- (vgl. Figur 5) werden.

Der Grundkörper -101- besitzt auf der Oberseite offene Querrillen -116- (vgl. Figuren 5 und 6), die im Radius angeordnet sind und nach unten, also in Richtung des Bodens, in einem geraden Hinterschnitt -117- auslaufen. Die kann man in den Figuren 5 und 6 erkennen. Dadurch entstehen an den Aussenkanten der Querrillen - 116- Haltenocken -118-, die den von oben in die Querrille -116- eingelegten Draht am Herausrutschen hindern. Diese Anordnung kommt vorzugsweise bei großen Pflanzen (vgl. Figur 7c und 7d) zur Anwendung, um das Durchstecken des Drahtes durch den Halter zu ersparen, und als Gegenlager -119- (vgl. Figur 7c) bei mittelgroßen Pflanzen, wobei auch hier der Draht im Gegenlager von oben eingelegt wird.

Wie man den Figuren 5 und 6 entnehmen kann, können im Grundkörper zusätzliche Sicherungslöcher -120- vorgesehen sein, in welche abgewinkelte Drahtstücke o.ä -121- gesteckt werden können, die eine zusätzliche Sicherung gegen Herausrutschen der Drähte -114- darstellen.

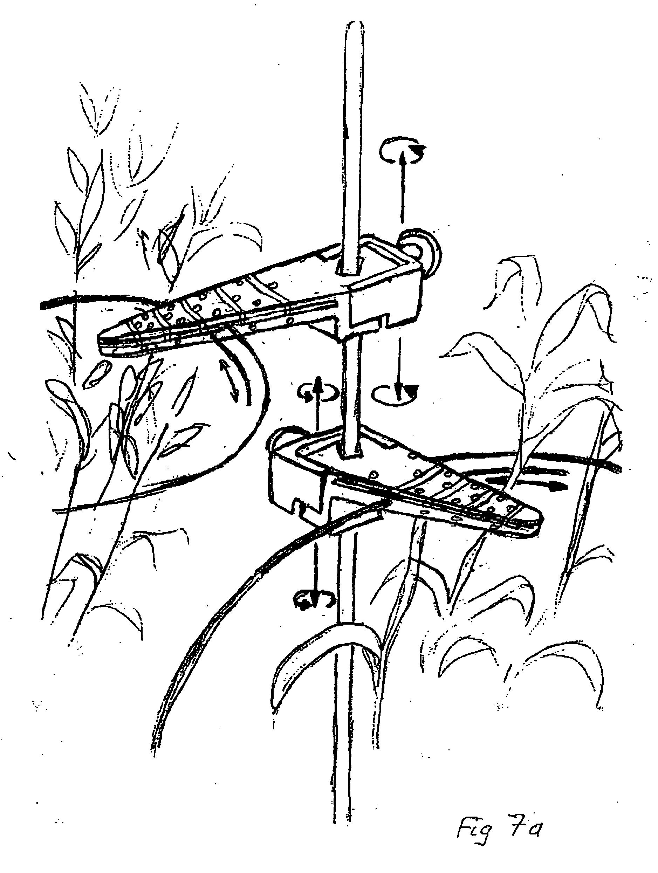

Die an der Längsseite des Pflanzenhalters verlaufenden Rillen -110- besitzen vorzugsweise Querdurchbrüche -113-, durch die der Draht -115- gesteckt wird. Durch Abwinkeln des Drahtes -115- am Ende und anschliessendes Zurückziehen des Drahtes in die Längsrille (vgl. Figur 5a a, b und c) wird der Draht -115- im Halter fixiert. Unterhalb der Rille -110- befinden sich im Grundkörper -101- an bestimmten Punkten Bohrungen -122-, in die der Draht -115-, wenn er um die Pflanze gelegt worden ist, in den Grundkörper zurückgesteckt wird. Die Figuren 7a bis 7d zeigen den Pflanzenhalter mit seinen Einsatzmöglichkeiten. Es sind alle Ringformen und - größen möglich.

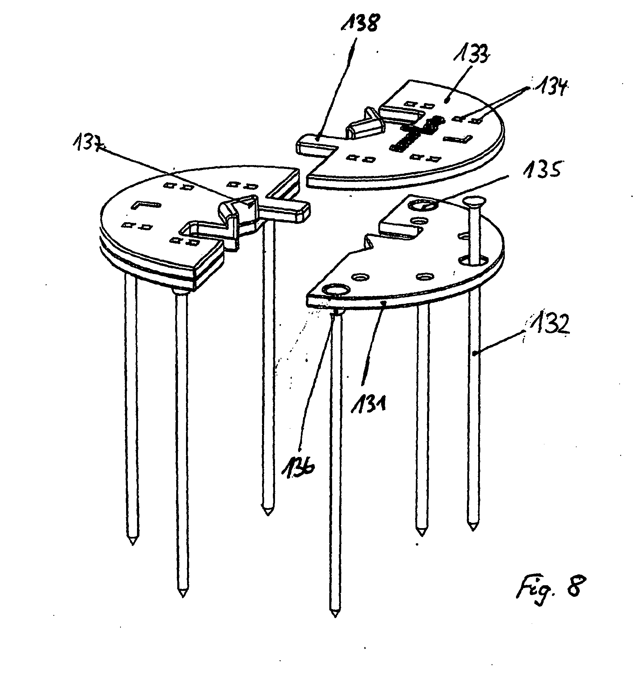

Figur 8 stellt die Bodenkralle zur Unterstützung der Befestigung des Stabes -106- (Figur 5) im Boden dar. Die Bodenkralle wird mit den Spikes -132- neben dem Stab in den Boden gedrückt und stützt ihn gegen seitlichen Druck ab, wobei in der Regel entweder eine Kralle (im Innenbereich) oder zwei Krallen (im Außenbereich) zum Einsatz kommen, um z.B. den Stab gegen verschiedene Windrichtungen zu halten. Die Kralle besteht aus einer Grundplatte -131-, in die beliebig viele Spikes -132- eingesetzt werden. Die Abdeckplatte -133- wird auf die Grundplatte geclipst -134-. Die Köpfe der Spikes sind in die Grundplatte eingelassen -135- und durch die Abdeckplatte -133- gegen Herausrutschen gesichert.
An der Unterseite der Grundplatte -131- sind Warzen angebracht -136-, um die Führung der Spikes zu verbessern, In der Mitte befindet sich eine prismatische oder halbrunde Ausnehmung -137- die als Halterung der Stabe dient.
Versetzt von der Mitte besitzt die Kralle zwei Führungszapfen -138-, die auch einen zusätzlichen Schutz gegen seitliches Herausrutschen des Stabes bieten.

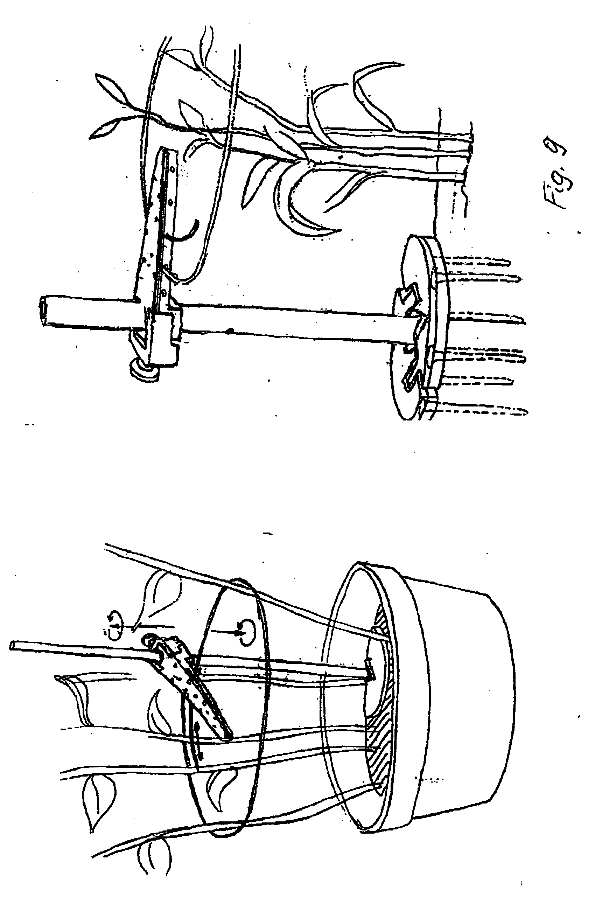

Figur 9 zeigt die Bodenkralle zur Unterstützung des Stabes mit diversen Einsatzmöglichkeiten im Innenbereich (Topfpflanzen) und Aussenbereich.

## Patentansprüche

1. Universeller Pflanzenhalter mit einem länglichen Grundkörper (1; 101) mit mehreren offenen oder geschlossenen Querrillen (10; 116) zur Aufnahme von Befestigungsmitteln (11; 114; 115) für Pflanzen, und einer an einem Ende angeordneten Befestigungsvorrichtung zur Fixierung des Pflanzenhalters **dadurch gekennzeichnet, dass** der Grundkörper (1; 101) oben offene, im Radius angeordnete Querrillen (116) besitzt, die in einen geraden Hinterschnitt (117) auslaufen, wobei an den Aussenkanten der Querrillen (116) Haltenocken (118) entstehen, die zusammen mit dem Hinterschnitt ein Herausrutschen eines Drahtes (114,115) aus der Querrille verhindern.

2. Pflanzenhalter nach Anspruch 1, **dadurch gekennzeichnet dass** der längliche Grundkörper (1; 101) konisch zuläuft.

3. Pflanzenhafter nach einem der vorhergehenden Ansprüche, **dadurch**
**gekennzeichnet dass** die Befestigungsvorrichtung als prismatische Aufnahme (13; 105a) für einen Stab (6; 106) ausgeführt ist.

4. Pflanzenhalter nach einem der vorhergehenden Ansprüche, **dadurch**
**gekennzeichnet dass** die Befestigungsvorrichtung als Wandhalterung ausgeführt ist.

5. Pflanzenhalter nach einem der vorhergehenden Ansprüche, **dadurch**
**gekennzeichnet dass** die Befestigungsvorrichtung des Pflanzenhalters eine Verzahnung (9; 109) am Ende des Grundkörpers (1; 101) aufweist, die sich an einem Klemmblock (3; 103) wiederholt.

6. Pflanzenhalter nach Anspruch 5, **dadurch gekennzeichnet dass** der Klemmblock (3; 103) eine Klemmschraube (4; 104) aufweist, womit der Pflanzenhalter sicher an einem (6; 106) befestigt wird.

7. Pflanzenhalter nach einem der vorhergehenden Ansprüche, **dadurch gekennzeichnet dass** eine Abdeckplatte (2) auf dem Grundkörper (1) mit Clipsen (15) oder Schrauben sicher befestigt und schnell gelöst werden kann.

8. Pflanzenhalter nach Anspruch 7, **dadurch gekennzeichnet dass** der Grundkörper (101) und die Abdeckplatte aus einem Stück bestehen.

9. Pflanzenhalter nach Anspruch 5, **dadurch gekennzeichnet, dass** der Klemmblock (103) eine Klemmschraube mit prismatischern Druckstück (105) aufweist, womit der Pflanzenhalter sicher am Stab (106) befestigt wird.

10. Pflanzenhalter nach einem der vorhergehenden Ansprüche,**dadurch gekennzeichnet, dass** der Grundkörper (101) an der Längsseite verlaufende Rillen (110) hat, die als Fixierung und Verdrehsicherung des Drahtes (115) dienen.

11. Pflanzenhalter nach Anspruch 10 **dadurch gekennzeichnet, dass** der Grundkörper (101) senkrecht angeordnete Löcher (111) besitzt, in die abgewinkelte Drahtstücke (112) o.a. von oben eingesteckt werden, die ein Herausrutschen des Drahtes (115) aus der Rille (110) zusätzlich verhindern.

12. Pflanzenhalter nach Anspruch 10 oder 11, **dadurch gekennzeichnet, dass** in der Rille (110) des Grundkörpers (101) Querdurchbrüche oder Bohrungen (113) vorgesehen sind, und Löcher (122) im unteren Steg des Grundkörpers (101), die um die ca. Drahtstärke des Drahtes (115) in der Längsachse des Grundkörpers (101) versetzt angeordnet sind.

13. Pflanzenhalter nach einem der vorhergehenden Ansprüche, **dadurch gekennzeichnet, dass** im Grundkörper (101) auf der Oberseite mittig der Längsachse entlang Bohrungen (120) angebracht sind, in die abgewinkelte Drahtstücke o.ä (121) gesteckt werden, die als zusätzliche Sicherung gegen Herausrutschen des Drahtes (114) dienen.

14. Pflanzenhalter nach einem der vorhergehenden Ansprüche,**dadurch gekennzeichnet dass** er eine Bodenkralle zum Fixieren eines in den Boden getriebenen Stabes (6; 106) besitzt, die halbrund ist und an der geraden Seite eine prismatische oder runde Ausnehmung für die Aufnahme des Stabes hat.

15. Pflanzenhalter nach Anspruch 14, **dadurch gekennzeichnet dass** die Bodenkralleeine Grundplatte (21; 131) mit mehreren Löchern (28; 135) zur Aufnahme von Spikes (22; 132) besitzt und an der Unterseite Warzen (26; 136) hat, um die Führung der Spikes zu verlängern.

16. Pflanzenhalter nach Anspruch 15, **dadurch gekennzeichnet, dass** die Grundplatte (21; 131) der Bodenkralle Vertiefungen (25; 135) aufweist, in die die Köpfe der Spikes (22; 132) eingelassen werden.

17. Pflanzenhalter nach Anspruch 15 oder 16 **dadurch gekennzeichnet, dass** die Bodenkralle eine Abdeckplatte (23) aufweist, die mit Schrauben (24) auf der Grundplatte (21) befestigt wird, was das Herausrutschen der Spikes (21) verhindert.

18. Pflanzenhalter nach Anspruch 17 **dadurch gekennzeichnet, dass** die Abdeckplatte (133) der Bodenkralle Führungsnocken (138) besitzt, die einen besseren Verbund von zwei Grundplatten untereinander bewirken und ein seitliches Herausrutschen des Stabes (106) verhindern.

19. Pflanzenhalter nach Anspruch 17 oder 18 **dadurch gekennzeichnet, dass** die Abdeckplatte (133) der Bodenkralle mit Clipsen (134) auf der Grundplatte (131) befestigt wird.

## Claims

1. Versatile plant support with an elongated base body (1; 101) with a plurality of open or closed transverse slots (10; 116) for seating fastening means (11; 114; 115) for plants and with a fastening device arranged at one end for fixing the plant support, **characterized in that** the base body (1; 101) has transverse slots (116) which are arcuate and open at the top and which bottom out in a straight undercut (117) thus forming keeper nebs (118) at the outer edges of the transverse slots (116) which, together with the undercut, prevent a wire (114, 115) from slipping out of the transverse groove.

2. Plant support according to Claim 1, **characterized in that** the elongated base body (1; 101) is tapered.

3. Plant support according to either of the preceding claims, **characterized in that** the fastening device is realized as a prismatic jaw (13; 105a) for a rod (6; 106).

4. Plant support according to any one of the preceding claims, **characterized in that** the fastening device is realized as a wall mounting.

5. Plant support according to any one of the preceding claims, **characterized in that** the fastening device of the plant support has toothing (9; 109) at the end of the base body (1; 101) which is repeated on a clamping block (3; 103).

6. Plant support according to Claim 5, **characterized in that** the clamping block (3; 103) has a clamping screw (4; 104) by means of which the plant support is securely fastened to a rod (6; 106).

7. Plant support according to any one of the preceding claims, **characterized in that** a cover plate (2) can be securely fastened to, and quickly removed from, the base body (1) by means of clips (15) or screws.

8. Plant support according to Claim 7, **characterized in that** the base body (101) and cover plate are made in one piece.

9. Plant support according to Claim 5, **characterized in that** the clamping block (103) has a clamping screw with a prismatic pressure piece (105) by means of which the plant support is securely fastened to the rod (106).

10. Plant support according to any one of the preceding claims, **characterized in that** the base body (101) has grooves (110) extending along the longitudinal side which serve to fix the wire (115) and prevent it from twisting.

11. Plant support according to Claim 10, **characterized in that** the base body (101) has perpendicular holes (111) into which bent pieces of wire or the like (112) are inserted from above as an additional means of preventing the wire (115) from slipping out of the groove (110).

12. Plant support according to Claim 10 or Claim 11, **characterized in that** transverse leadthroughs or bores (113) are provided within the groove (110) in the base body (101), and holes (122) offset in the longitudinal axis of the base body (101) by approximately the thickness of the wire (115) are arranged in the lower web of the base body (101).

13. Plant support according to any one of the preceding claims, **characterized in that** holes (120) are provided on top of the base body (101), centrally along the longitudinal axis, into which bent pieces of wire or the like (121) can be inserted as additional security against slipping out of the wire (114).

14. Plant support according to any one of the preceding claims, **characterized in that** it possesses a ground anchor claw for fixing a rod (6; 106) driven into the ground, which ground anchor claw is semicircular, and has a prismatic or rounded recess on its straight side for seating the rod.

15. Plant support according to Claim 14, **characterized in that** the ground anchor claw has a base plate (21; 131) with a number of holes (28; 135) to receive spikes (22; 132), and has bosses (26; 136) on the underside to afford extended guidance to the spikes.

16. Plant support according to Claim 15, **characterized in that** the base plate (21; 131) of the ground anchor claw has recesses (25; 135) into which the heads of the spikes (22; 132) are sunk.

17. Plant support according to Claim 15 or Claim 16, **characterized in that** the ground anchor claw has a cover plate (23) fastened to the base plate (21) with screws (24) thus preventing the spikes (21) from coming out.

18. Plant support according to Claim 17, **characterized in that** the cover plate (133) of the ground anchor claw has guide nebs (138) which provide a better joint between two base plates and prevent the rod (106) from slipping out sideways.

19. Plant support according to Claim 17 or Claim 18, **characterized in that** the cover plate (133) of the ground anchor claw is fastened to the base plate (131) with clips (134).

## Revendications

1. Support de plantes universel avec un corps de base oblong (1 ; 101) pourvu de plusieurs rainures transversales (10 ; 116) ouvertes ou fermées destinées à recevoir des moyens de fixation (11 ; 114 ; 115) pour des plantes, et avec un dispositif de fixation disposé à une extrémité, pour fixer le support de plantes,
**caractérisé en ce que** le corps de base (1 ; 101) comporte, en haut, des rainures transversales (116) qui sont ouvertes, qui sont disposées suivant un certain rayon et qui se terminent par une contre-dépouille droite (117), ce qui forme sur les bords extérieurs des rainures transversales (116) des saillies de retenue (118) qui, avec la contre-dépouille, empêchent un fil (114, 115) de glisser de la rainure transversale.

2. Support de plantes selon la revendication 1, **caractérisé en ce que** le corps de base oblong (1 ; 101) a une forme conique.

3. Support de plantes selon l'une des revendications précédentes, **caractérisé en ce que** le dispositif de fixation est conçu comme un logement prismatique (13 ; 105a) pour une tige (6 ; 106).

4. Support de plantes selon l'une des revendications précédentes, **caractérisé en ce que** le dispositif de fixation est conçu comme une attache murale.

5. Support de plantes selon l'une des revendications précédentes, **caractérisé en ce que** le dispositif de fixation du support de plantes présente à l'extrémité du corps de base (1 ; 101) une denture (9 ; 109) qui est reproduite sur un bloc de serrage (3 ; 103).

6. Support de plantes selon la revendication 5, **caractérisé en ce que** le bloc de serrage (3 ; 103) comporte une vie de serrage (4 ; 104), moyennant quoi le support de plantes est fixé de façon sûre à une tige (6 ; 106).

7. Support de plantes selon l'une des revendications précédentes, **caractérisé en ce qu'**une plaque de recouvrement (2) peut être fixée de façon sûre et détachée rapidement sur le corps de base (1) à l'aide de clips (15) ou de vis.

8. Support de plantes selon la revendication 7, **caractérisé en ce que** le corps de base (101) et la plaque de recouvrement sont composés d'une seule pièce.

9. Support de plantes selon la revendication 5, **caractérisé en ce que** le bloc de serrage (103) comporte une vis de serrage avec une pièce de pression prismatique (105), moyennant quoi le support de plantes est fixé de façon sûre à la tige (106).

10. Support de plantes selon l'une des revendications précédentes, **caractérisé en ce que** le corps de base (101) a des rainures (110) qui s'étendent sur son côté longitudinal et qui servent de fixation et de blocage en rotation du fil (115).

11. Support de plantes selon la revendication 10, **caractérisé en ce que** le corps de base (101) a des trous (111) disposés à la verticale, dans lesquels sont introduits par le haut des morceaux de fil coudés (112) ou des éléments similaires qui empêchent en supplément le fil (115) de glisser de la rainure (110).

12. Support de plantes selon la revendication 10 ou 11, **caractérisé en ce qu'**il est prévu dans la rainure (110) du corps de base (101) des ouvertures transversales ou des perçages (113), et dans la branche inférieure du corps de base (101) des trous (122) qui sont décalés suivant environ l'épaisseur du fil (115) dans l'axe longitudinal du corps de base (101).

13. Support de plantes selon l'une des revendications précédentes, **caractérisé en ce qu'**il est prévu sur la face supérieure du corps de base (101), au centre le long de l'axe longitudinal, des perçages (120) dans lesquels sont introduits les morceaux de fils coudés ou les éléments similaires (121) qui servent de protection supplémentaire contre un glissement du fil (114).

14. Support de plantes selon l'une des revendications précédentes, **caractérisé en ce qu'**il comprend un ancrage au sol qui est prévu pour la fixation d'une tige (6 ; 106) enfoncée dans le sol, qui est semi-circulaire et qui présente sur son côté droit un évidement prismatique ou rond pour recevoir la tige.

15. Support de plantes selon la revendication 14, **caractérisé en ce que** l'ancrage au sol a une plaque de base (21 ; 131) avec plusieurs trous (28 ; 135) pour recevoir des pointes (22 ; 132), et présente sur sa face inférieure des bossages (26 ; 136) pour prolonger le guidage des pointes.

16. Support de plantes selon la revendication 15, **caractérisé en ce que** la plaque de base (21 ; 131) de l'ancrage au sol présente des creux (25 ; 135) dans lesquels sont introduites les têtes des pointes (22 ; 132).

17. Support de plantes selon la revendication 15 ou 16, **caractérisé en ce que** l'ancrage au sol comporte une plaque de recouvrement (23) qui est fixée à l'aide de vis (24) sur la plaque de base (21), ce qui empêche un glissement des pointes (21).

18. Support de plantes selon la revendication 17, **caractérisé en ce que** la plaque de recouvrement (133) de l'ancrage au sol a des saillies de guidage (138) qui ont pour effet un meilleur assemblage de deux plaques de base et qui empêchent un glissement latéral de la tige (106).

19. Support de plantes selon la revendication 17 ou 18, **caractérisé en ce que** la plaque de recouvrement (133) de l'ancrage au sol est fixée à l'aide de clips (134) sur la plaque de base (131).
